# EUROPÄISCHE PATENTSCHRIFT

(11) **EP 4 434 767 B1**
(45) Veröffentlichungstag und Bekanntmachung des Hinweises auf die Patenterteilung: **17.12.2025**
(21) Anmeldenummer: 24158813.6
(22) Anmeldetag: 21.02.2024
(51) Int. Cl.: B60C 11/03, B60C 11/12

(54) **NUTZFAHRZEUGREIFEN**
COMMERCIAL VEHICLE TYRE
PNEU DE VÉHICULE UTILITAIRE

(30) Priorität: 21.03.2023 DE 102023202476
(43) Veröffentlichungstag der Anmeldung: 25.09.2024
(73) Patentinhaber: Continental Reifen Deutschland GmbH, 30175 Hannover (DE)
(72) Erfinder: Faturikova, Dagmar, 020 01 Púchov (SK); Korbas, Mario, 020 01 Púchov (SK); Valek, Branislav, 020 01 Púchov (SK); Pikna, Michal, 020 01 Púchov (SK); von Zobeltitz, Carsten, 30175 Hannover (DE); Pickel, David, Fort Mill, SC 29707 (US); Lekova, Dobromira, 30175 Hannover (DE)
(74) Vertreter: Continental Corporation

(56) Entgegenhaltungen:
- EP-A1- 2 159 080
- WO-A1-2009/037056
- WO-A1-2012/072337
- WO-A1-2017/040007
- US-A1- 2019 366 779

## Beschreibung

Die Erfindung betrifft einen Nutzfahrzeugreifen mit einem laufrichtungsgebunden ausgeführten Laufstreifen mit einem zentralen Laufstreifenbereich und durch schulterseitige Umfangsrillen von diesem getrennten, schulterseitigen Profilrippen, wobei der zentrale Laufstreifenbereich an die schulterseitigen Umfangsrillen angrenzende, durch Teilungseinschnitte mitbegrenzte, blockartige Profilstrukturen aufweist, welche jeweils mit weiteren Einschnitten versehen sind, wobei die Teilungseinschnitte und die weiteren Einschnitte jeweils eine Breite von 0,4 mm bis 1,6 mm und eine maximale Tiefe von 60% bis 100% der Profiltiefe aufweisen.

Ein derartiger Nutzfahrzeugreifen ist beispielsweise aus der WO 2017/040007 A1 bekannt. Der Nutzfahrzeugreifen weist einen laufrichtungsgebunden ausgeführten Laufstreifen mit einem von zwei Umfangsrillen begrenzten, zentralen Laufstreifenbereich auf, welcher mit zwei in Umfangsrichtung umlaufenden Einschnitten versehen ist, die jeweils in einen Kanal einmünden und dem zentralen Laufstreifenbereich drei Umfangsrippen verleihen. Die an die Umfangsrillen angrenzenden Umfangsrippen sind von zur axialen Richtung geneigt verlaufenden Teilungseinschnitten durchquert, sodass die Umfangsrippen blockartige Profilstrukturen aufweisen. Jede blockartige Profilstruktur ist mit kurzen Einschnitten versehen, welche in die jeweils angrenzende Umfangsrille einmünden. Der Nutzfahrzeugreifen soll eine gute Abriebbeständigkeit aufweisen.

Fahrzeugluftreifen mit laufrichtungsgebunden ausgeführtem Laufstreifen sind auch in der US 2019/366779 A1 und der EP 2 159 080 A1 offenbart.

Es ist üblich, bei Nutzfahrzeugreifen Laufstreifen mit Umfangsrippen vorzusehen, welche sich gegenüber Profiblockreihen dahingehend unterscheiden, dass sie keine oder kaum durch Querrillen voneinander getrennte Profilblöcke aufweisen. Die Umfangsrippen sind meist mit einer Vielzahl von Einschnitten versehen, insbesondere von diesen durchquert, wodurch Vorteile im Hinblick auf die Traktionseigenschaften erzielt werden. Es besteht aktuell weiterhin das Bestreben, Nutzfahrzeugreifen im Hinblick auf das Traktionsverhalten - sowohl unter winterlichen Fahrbedingungen als auch auf nasser Fahrbahn - zu verbessern.

Der Erfindung liegt die Aufgabe zugrunde, bei einem Nutzfahrzeugreifen der eingangs genannten Art das Traktionsverhalten unter winterlichen Fahrbedingungen, also insbesondere auf Eis und/oder Schnee, sowie das Traktionsverhalten auf nasser Fahrbahn weiter zu verbessern.

Gelöst wird die gestellte Aufgabe erfindungsgemäß dadurch, dass der zentrale Laufstreifenbereich mit über seine maximale Breite V-förmig zueinander verlaufenden, innerhalb des zentralen Laufstreifenbereichs endenden Schrägrillen versehen ist, welche - in Folge des V-förmigen Verlaufs - in die eine schulterseitige Umfangsrille einmündende Schrägrillen und die andere schulterseitige Umfangsrille einmündende Schrägrillen sind, wobei die in die eine schulterseitige Umfangsrille einmündenden Schrägrillen zu den in die andere schulterseitige Umfangsrille einmündenden Schrägrillen in Umfangsrichtung versetzt sind, wobei die Teilungseinschnitte zwischen V-förmig zueinander verlaufenden Schrägrillen verlaufen und vom Ende jeder Schrägrille jeweils ein Teilungseinschnitt ausgeht, sodass die Teilungseinschnitte gemeinsam mit den Schrägrillen den zentralen Laufstreifenbereich in die blockartigen Profilstrukturen gliedern, wobei die weiteren Einschnitte die jeweilige blockartige Profilstruktur durchqueren, bezüglich der Umfangsrichtung gegensinnig zu den an die blockartige Profilstruktur angrenzenden Schrägrillen geneigt sind und jeweils innerhalb derselben blockartigen Profilstruktur zur axialen Richtung unter Winkeln verlaufen, welche ausgehend von jenem weiteren Einschnitt, welcher gegen die Abrollrichtung auf den entsprechenden Teilungseinschnitt folgt, von Einschnitt zu Einschnitt stufenweise zunehmen.

Die Schrägrillen verbessern beim Fahren auf nasser Fahrbahn die Entwässerung des zentralen Laufstreifenbereichs, wobei dieser weiterhin für das Traktionsverhalten vorteilhaft steife Profilstrukturen aufweist. Die weiteren Einschnitte nahe der Reifenäquatorialebene sind gegenüber den weiter laufstreifenaußenseitig liegenden, weiteren Einschnitten weniger stark zur axialen Richtung geneigt. Die weiteren Einschnitte nahe der Reifenäquatorialebene sorgen vor allem beim Auftreten von in bzw. im Wesentlichen in Umfangsrichtung wirkenden Kräften für ein gutes Traktionsverhalten, insbesondere auf mit Schnee und/oder Eis bedeckter Fahrbahn. Die weiter laufstreifenaußenseitig liegenden, zunehmend stärker zur axialen Richtung geneigt verlaufenden, weiteren Einschnitte sorgen für ein gutes Traktionsverhalten, vor allem auf mit Schnee und/oder Eis bedeckter Fahrbahn und unter den beim Fahren von Kurven wirkenden Kräften.

Gemäß einer bevorzugten Ausführung verlaufen die Teilungseinschnitte, in Draufsicht betrachtet, in axialer Richtung. Dies ist für die Traktionseigenschaften beim Auftreten von in bzw. im Wesentlichen in Umfangsrichtung wirkenden Kräften von weiterem Vorteil.

Eine weitere bevorzugte Ausführung ist dadurch gekennzeichnet, dass die Winkel, unter welchen die weiteren Einschnitte zur axialen Richtung verlaufen, 2° bis 70°, insbesondere bis zu 60°, bevorzugt bis zu 50°, betragen, wobei jeweils innerhalb derselben blockartigen Profilstruktur der Winkel von Einschnitt zu Einschnitt stufenweise insbesondere um 2° bis 10°, bevorzugt um 3° bis 7°, besonders bevorzugt um 4° bis 6°, zunimmt. Eine derartige Winkelung ist im Hinblick auf die beim Fahren von Kurven auf den Reifen zu übertragenden Kräften besonders vorteilhaft.

Gemäß einer bevorzugten Ausführung ist vorgesehen, dass die Schrägrillen eine maximale Tiefe von 60% bis 100%, insbesondere von 75% bis 95%, der Profiltiefe, eine Breite von 5,0 mm bis 35,0 mm, insbesondere von 10,0 mm bis 25,0 mm, sowie eine in die axiale Richtung projizierte Länge von 40% bis 60%, insbesondere von 45% bis 55%, der Breite des zentralen Laufstreifenbereichs aufweisen. Solche Schrägrillen sind für die Entwässerung des zentralen Laufstreifenbereichs und daher für die Traktionseigenschaften auf nasser Fahrbahn vorteilhaft.

Eine weitere bevorzugte Ausführung ist dadurch gekennzeichnet, dass jede blockartige Profilstruktur mit jeweils einem durchquerenden, randseitigen Mikroeinschnitt mit einer Breite von 0,4 mm bis 1,6 mm, insbesondere von 0,6 mm bis 1,2 mm, und einer Tiefe von 1,0 mm bis 3,0 mm, insbesondere von bis zu 2,0 mm, versehen ist, wobei sich innerhalb jeder blockartigen Profilstruktur sämtliche weiteren Einschnitte zwischen dem randseitigen Mikroeinschnitt und dem Teilungseinschnitt befinden. Die Mikroeinschnitte tragen bei neuem bzw. wenig abgeriebenem Reifen zu einer weiteren Verbesserung der Traktionseigenschaften bei und reduzieren die Steifigkeit der blockartigen Profistruktur im diesbezüglich kritischen Eck- bzw. Randbereich vorteilhafter Weise kaum bzw. nicht.

Gemäß einer weiteren bevorzugten Ausführung sind in jeder blockartigen Profilstruktur vier bis zehn, insbesondere acht oder neun, der weiteren Einschnitte vorgesehen. Dies trägt zu einer guten Anpassungsfähigkeit der blockartigen Profilstruktur beim Durchlaufen der Bodenaufstandsfläche bei, was ebenfalls für die Traktionseigenschaften von Vorteil ist.

Ferner ist es bevorzugt, wenn die Schrägrillen, in Draufsicht betrachtet, zur Umfangsrichtung unter einem Winkel von 30° bis 70°, insbesondere von 35° bis 60°, bevorzugt von 40° bis 50°, verlaufen.

Eine weitere bevorzugte Ausführung sieht vor, dass die Schrägrillen, in Draufsicht betrachtet, derart bogenförmig verlaufen, dass ein bogenaußenseitig relativ zur Umfangsrichtung ermittelter, auf die Rillenmittellinie bezogener spitzer Winkel ausgehend vom laufstreifeninnenseitigen Ende der Schrägrille zum laufstreifenaußenseitigen Ende der Schrägrille fortlaufend zunimmt. Die Bogenform der Schrägrille sorgt dafür, dass die Rillenkanten in Richtung Laufstreifenaußenseite relativ zur axialen Richtung abnehmend geneigt sind. In dieser Hinsicht verhält sich die Winkelung der Rillenkanten daher entgegengesetzt zur speziellen Winkelung der Einschnitte, was - bedingt durch die beim Fahren in verschiedenen Richtungen auftretenden Kräften - im Hinblick auf die Traktionseigenschaften besonders günstig ist.

Bevorzugt weisen die Teilungseinschnitte über ihre gesamte Erstreckung die maximale Tiefe auf. Dadurch sind die blockartigen Profilstrukturen deutlich voneinander "entkoppelt" und schmiegen sich beim Abplatten des Laufstreifens auf für die Traktionseigenschaften vorteilhafte Weise an die Fahrbahn an.

Eine weitere bevorzugte Ausführung ist dadurch gekennzeichnet, dass weitere Einschnitte und/oder Teilungseinschnitte vorgesehen sind, welche, im Querschnitt betrachtet, einen kanalförmig gerundeten Einschnittgrund aufweisen. Solche Kanäle verbessern das Wasseraufnahmeverhalten der Einschnitte und tragen zur Entwässerung bei.

Bevorzugter Weise sind weitere Einschnitte und/oder Teilungseinschnitte vorgesehen, welche zumindest über einen Großteil ihrer radialen Erstreckung eine in radialer Richtung verlaufende Wellenform aufweisen. Dies verhindert vor allem ein Eindringen von Steinen.

Ferner ist es vorteilhaft, wenn weitere Einschnitte und/oder Teilungseinschnitte vorgesehen sind, welche, in Draufsicht betrachtet, zumindest über einen Großteil ihrer Erstreckung in einer Wellenform, insbesondere in Form einer Zickzack-Welle, verlaufen. Unter seitlich wirkenden Kräften stützen sich die durch solche Einschnitte und Teileinschnitte gebildeten Profilsegmente aneinander ab, wodurch die blockartigen Profilstrukturen versteift werden, was ebenfalls für die Traktionseigenschaften günstig ist.

Eine weitere bevorzugte Ausführung sieht vor, dass jeder weitere Einschnitt einen ersten Randabschnitt mit einer in radialer Richtung ermittelten Tiefe von 65% bis 95% der maximalen Tiefe des Einschnitts und einen zweiten Randabschnitt mit einer in radialer Richtung ermittelten Tiefe von 1,0 mm bis 3,0 mm aufweist. Dies sorgt für eine gute Balance zwischen einer hohen Steifigkeit und guten Entwässerungseigenschaften. Folglich sind auch die Traktionseigenschaften verbessert.

Bei der zuletzt genannten bevorzugten Ausführung besteht eine vorteilhafte Weiterentwicklung darin, dass innerhalb jeder blockartigen Profilstruktur aufeinanderfolgende weitere Einschnitte derart ausgeführt sind, dass jeweils ein Einschnitt mit einem zum laufstreifenaußenseitigen Einschnittende verlaufenden, ersten Randabschnitt abwechselnd auf einen Einschnitt mit einem zum laufstreifenaußenseitigen Einschnittende verlaufenden, zweiten Randabschnitt folgt. Dies sorgt ebenfalls für eine gute Balance zwischen einer hohen Steifigkeit und guten Entwässerungseigenschaften.

Gemäß einer weiteren bevorzugten Ausführung münden die Einschnitte und/oder die Teilungseinschnitte - in Draufsicht betrachtet und jeweils bezogen auf eine dem Einschnittverlauf folgende Einschnittmittellinie - unter relativ zur an der Laufstreifenperipherie vorliegenden jeweiligen Kante der Schrägrille ermittelten Supplementwinkel in die Schrägrille ein, wobei die Supplementwinkel von 90° um bis zu 30°, insbesondere um bis zu 25°, abweichen. Durch diese Ausführung sind die an den Einmündungen der Teilungseinschnitte bzw. den Einmündungen der Einschnitte vorliegenden Blocksegmenteckbereiche im Wesentlichen rechtwinklig. Deutlich spitzwinkelige, abriebanfällige Eckbereiche sind vermieden, sodass der zentrale Laufstreifenbereich gleichmäßig abreibt.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 eine Draufsicht einen Umfangsabschnitt eines Laufstreifens eines Nutzfahrzeugreifens mit einer Ausführungsvariante der Erfindung,
Fig. 2 eine Visualisierung eines Einschnitts (Abzugskörper des Einschnitts) und
Fig. 3 eine vergrößerte Draufsicht auf einen Ausschnitt des Laufstreifens.

Gemäß der Erfindung ausgeführte Nutzfahrzeugreifen sind Reifen für mehrspurige Kraftfahrzeuge, insbesondere für Busse oder Lastkraftwagen (LKW), sowie vorzugsweise Reifen in Radialbauart für Felgen mit einem Felgendurchmesser von 17,5, 19,5 oder 22,5 Zoll.

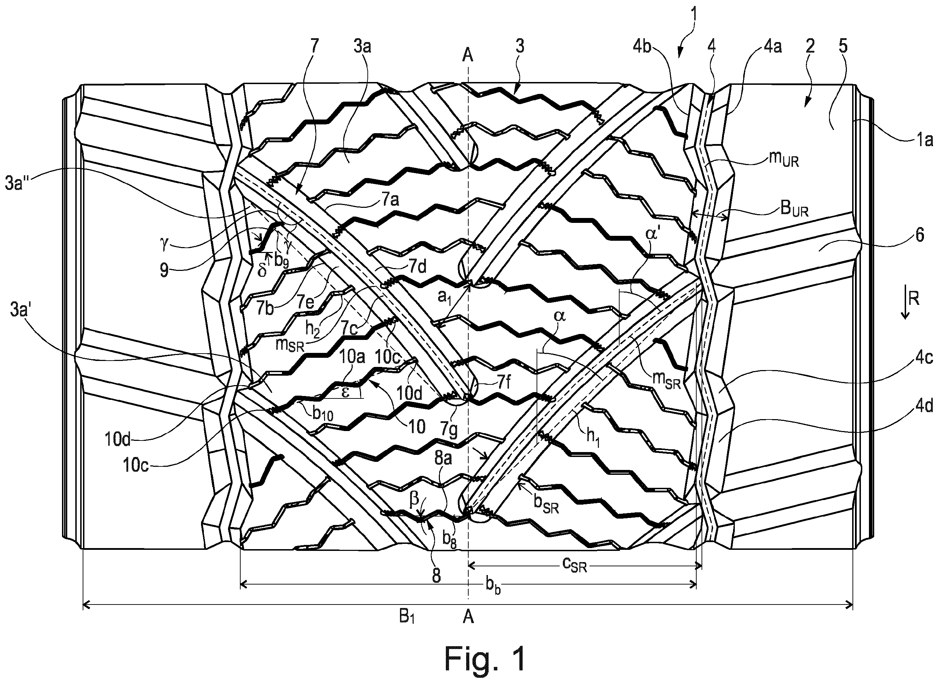

Fig. 1 zeigt eine Draufsicht auf einen Umfangsabschnitt eines Laufstreifens 1 eines Nutzfahrzeugreifens. Die Reifenäquatorialebene ist durch eine Linie A-A gekennzeichnet. Der Laufstreifen 1 weist eine laufrichtungsgebundene Profilierung auf, wobei der Nutzfahrzeugreifen derart an einem Fahrzeug zu montieren ist, dass er die durch den Pfeil R angedeutete Abrollrichtung bei Vorwärtsfahrt aufweist.

Der Laufstreifen 1 ist laufstreifenaußenseitig durch an der Laufstreifenperipherie liegende, in Umfangsrichtung verlaufende Randkanten 1a begrenzt und weist eine in axialer Richtung ermittelte, auf die Randkanten 1a bezogene Breite B₁ auf. Der Laufstreifen 1 weist ferner zwei schulterseitige Profilrippen 2 und einen von der Reifenäquatorialebene (Linie A-A) halbierten, zentralen Laufstreifenbereich 3 auf, welcher von den schulterseitigen Profilrippen 2 jeweils durch eine Umfangsrille 4 getrennt ist.

Die Umfangsrillen 4 verlaufen, in Draufsicht betrachtet, in einer regelmäßigen Zickzack-Form, weisen jeweils eine dem Rillenverlauf folgende Rillenmittellinie m_{UR} sowie eine an der angrenzenden, schulterseitigen Profilrippe 2 ausgebildete, laufstreifenaußenseitige Rillenkante 4a und eine am zentralen Laufstreifenbereich 3 ausgebildete, laufstreifeninnenseitige Rillenkante 4b auf. Jede Umfangsrille 4 ist in radialer Richtung auf die jeweils vorgesehene Profiltiefe von 10,0 mm bis 26,0 mm ausgeführt, weist eine in Draufsicht senkrecht zur Rillenmittellinie m_{UR} sowie zwischen den Rillenkanten 4a, 4b ermittelte Breite B_{UR} von 10,0 mm bis 30,0 mm auf und setzt sich, in Draufsicht betrachtet, aus kurzen Rillenabschnitten 4c und gegenüber diesen länger ausgeführten, langen Rillenabschnitten 4d zusammen, wobei jeweils ein Rillenabschnitt 4c abwechselnd auf einen Rillenabschnitt 4d folgt und die Rillenabschnitte 4c bezogen auf die Umfangsrichtung gegensinnig zu den Rillenabschnitten 4d geneigt sind. Die eine Umfangsrille 4 ist bezüglich der Reifenäquatorialebene (Linie A-A) spiegelsymmetrisch zur anderen Umfangsrille 4 ausgeführt.

Die schulterseitigen Profilrippen 2 sind lediglich schematisch dargestellt, setzen sich aus in Umfangsrichtung aufeinanderfolgenden, schulterseitigen Profilblöcken 5 zusammen, welche durch in Rillenabschnitte 4c der jeweiligen Umfangsrille 4 einmündende, zur axialen Richtung unter einem Winkel von bis zu 25° sowie parallel zueinander verlaufende, schulterseitige Querrillen 6 voneinander getrennt sind. Die Anzahl der schulterseitigen Querrillen 6 innerhalb jeder schulterseitigen Profilrippe 2 ist derart, dass in jeden zweiten kurzen Rillenabschnitt 4c jeweils eine schulterseitige Querrille 6 einmündet, wobei die schulterseitigen Querrillen 6 in der einen schulterseitigen Profilrippe 2 zu den schulterseitigen Querrillen 6 in der anderen schulterseitigen Profilrippe 2 in Umfangsrichtung versetzt sind.

Der zentrale Laufstreifenbereich 3 weist eine auf die laufstreifeninnenseitigen Rillenkanten 4b bezogene, in axialer Richtung ermittelte maximale Breite b_{b} von 45% bis 80%, insbesondere von 50% bis 70%, bevorzugt von 55% bis 65%, der Breite B₁ des Laufstreifens 1 auf. Die maximale Breite b_{b} bezieht sich auf zwei in Umfangsrichtung ausgerichtete Linien, welche durch die am weitesten laufstreifenaußenseitig liegenden Stellen der laufstreifeninnenseitigen Rillenkanten 4b verlaufen.

Der zentrale Laufstreifenbereich 3 ist mit in Draufsicht über die maximale Breite b_{b} V-förmig zueinander verlaufenden, innerhalb des zentralen Laufstreifenbereichs 3 sacknutartig endenden, jeweils in eine der Umfangsrillen 4 einmündenden Schrägrillen 7 versehen. Die Abrollrichtung des Reifens bei Vorwärtsfahrt (Pfeil R) ist derart, dass die Schrägrillen 7 zuerst mit ihren laufstreifeninnenseitigen Enden in die Bodenaufstandsfläche eintreten. Die Schrägrillen 7 bilden eine Abfolge von in die eine Umfangsrille 4 einmündenden Schrägrillen 7 und eine Abfolge von in die andere Umfangsrille 4 einmündenden Schrägrillen 7, wobei die Schrägrillen 7 der einen Abfolge zu den Schrägrillen 7 der anderen Abfolge in Umfangsrichtung versetzt sind. Die Anzahl der Schrägrillen 7 ist derart, dass in jeden kurzen Rillenabschnitt 4c, in welchen auch eine schulterseitige Querrille 6 einmündet, jeweils eine Schrägrille 7 hineinverläuft, sodass die Anzahl der Schrägrillen 7 mit der Anzahl der Querrillen 6 übereinstimmt. Die Schrägrillen 7 weisen jeweils eine in Draufsicht dem Rillenverlauf folgende Rillenmittellinie m_{SR} auf, verlaufen, in Draufsicht betrachtet, jeweils bogenförmig (durchgehend gebogen), wobei die Schrägrillen 7 jeder Abfolge - bezogen auf ihre Rillenmittellinien m_{SR} - parallel zueinander sowie - bezogen auf eine die Enden der jeweiligen Rillenmittellinie m_{SR} verbindende, gerade verlaufende Hilfslinie h₁ - zur Umfangsrichtung unter einem Winkel α von 30° bis 70°, insbesondere von 35° bis 60°, bevorzugt von 40° bis 50°, verlaufen. Die Bogenform der Schrägrillen 7 ist dabei derart, dass ein bogenaußenseitig relativ zur Umfangsrichtung ermittelter, auf die Rillenmittellinie m_{SR} bezogener spitzer Winkel α' ausgehend vom laufstreifeninnenseitigen Ende der Schrägrille 7 zum laufstreifenaußenseitigen Ende der Schrägrille 7 fortlaufend zunimmt. Die Schrägrillen 7 enden laufstreifeninnenseitig in einem an der Laufstreifenperipherie in tangentialer Verlängerung ihrer Rillenmittellinie m_{SR} ermittelten Abstand a₁ von 10,0 mm bis 25,0 mm vor der jeweiligen Schrägrille 7 der anderen Abfolge. "In tangentialer Verlängerung" bedeutet, dass die Messung des Abstands a₁ entlang einer an die Rillenmittellinie m_{SR} angelegten, durch das laufstreifeninnenseitige Ende der Rillenmittelinie m_{SR} verlaufenden Tangente erfolgt.

Die Schrägrillen 7 weisen an der Laufstreifenperipherie jeweils eine bogenaußenseitige Rillenkante 7a, eine bogeninnenseitige Rillenkante 7b und eine zwischen diesen ausgebildete, bogenförmig verlaufende, laufstreifeninnenseitige Endkante 7g auf. Die bogeninnenseitige Rillenkante 7b ist jene, bei welcher, in Draufsicht betrachtet, eine die Enden der Rillenkante 7b verbindende, gerade Hilfslinie h₂ komplett außerhalb der Schrägrille 7 liegt. Jede Schrägrille 7 ist durch einen Rillengrund 7c, eine von der bogenaußenseitigen Rillenkante 7a ausgehende Rillenflanke 7d, eine von der bogeninnenseitigen Rillenkante 7b ausgehende Rillenflanke 7e und eine von der Endkante 7g ausgehende, zwischen den beiden Rillenflanken 7d, 7e sowie zum Rillengrund 7c verlaufende, in Draufsicht insbesondere bogenförmig ausgeführte Endflanke 7f begrenzt.

Die Schrägrillen 7 weisen in radialer Richtung jeweils eine maximale Tiefe (Tiefe an der tiefsten Stelle) von 60% bis 100%, insbesondere von 75% bis 95%, der Profiltiefe, eine in Draufsicht senkrecht zur Rillenmittellinie m_{SR} sowie zwischen den Rillenkanten 7a, 7b gemessene Breite b_{SR} von 5,0 mm bis 35,0 mm, insbesondere von 10,0 mm bis 25,0 mm, sowie eine auf die Rillenmittellinie m_{SR} bezogene, in die axiale Richtung projizierte Länge c_{SR} von 40% bis 60%, insbesondere von 45% bis 55%, der Breite b_{b} des zentralen Laufstreifenbereichs 3 auf. "Senkrecht zur Rillenmittellinie m_{SR}" bedeutet, dass die Messung der Breite b_{SR} senkrecht zu einer an die Rillenmittellinie m_{SR} angelegten Tangente erfolgt.

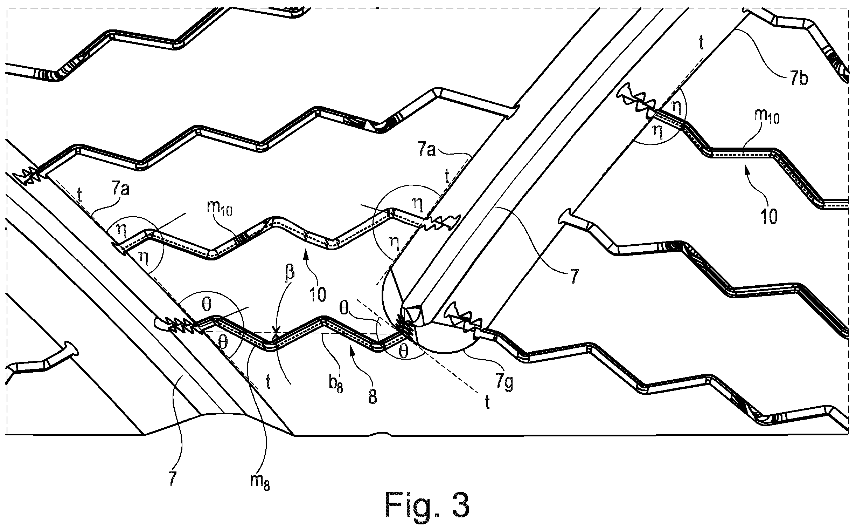

Der zentrale Laufstreifenbereich 3 ist mit Teilungseinschnitten 8 versehen, wobei pro Schrägrille 7 ein über die Endflanke 7f dieser Schrägrille 7 einmündender Teilungseinschnitt 8 vorgesehen ist, welcher in die in Verlängerung dieser Schrägrille 7 liegende Schrägrille 7 der jeweils anderen Abfolge einmündet, wobei der Teilungseinschnitt 8 in die letztgenannte Schrägrille 7 über die von der bogenaußenseitigen Rillenkante 7a ausgehende Rillenflanke 7d einmündet. Die Teilungseinschnitte 8 gehen daher von der Endflanke 7f, also dem Ende der jeweiligen Schrägrille 7, aus. Die Teilungseinschnitte 8 weisen eine konstante Breite von 0,4 mm bis 1,6 mm, insbesondere von 0,6 mm bis 1,2 mm, und in radialer Richtung eine vorzugsweise über ihre gesamte Erstreckung vorliegende, maximale Tiefe von 60% bis 100%, insbesondere von 85% bis 95%, der Profiltiefe auf. Die Teilungseinschnitte 8 verlaufen, in Draufsicht betrachtet, über den Großteil ihrer Erstreckung jeweils in Form einer harmonischen Zickzack-Welle sowie - bezogen auf ihre in Erstreckungsrichtung ausgerichteten Einschnittbasislinien b₈ - zur axialen Richtung jeweils unter einem Winkel β von 0° (vergl. Fig. 3) und setzen sich aus gerade verlaufenden Einschnittabschnitten 8a zusammen, welche miteinander jeweils einen Winkel von 120° bis 150°, insbesondere von 130° bis 140°, einschließen. Wie Fig. 3 zeigt, mündet jeder Teilungseinschnitt 8 - in Draufsicht betrachtet und bezogen auf eine dem Einschnittverlauf folgende Einschnittmittellinie ms - unter zwei relativ zur bogenaußenseitigen Rillenkante 7a bzw. zur Endkante 7g ermittelten Supplementwinkel θ in die Schrägrillen 7 ein, wobei die Supplementwinkel θ von 90° um bis zu 30°, insbesondere um bis zu 25°, abweichen. Die zwei Supplementwinkel θ ergänzen sich bekannter Weise auf 180° und sind jeweils relativ zu einer Tangente t ermittelt, welche durch das entsprechende Ende der Einschnittmittellinie ms verläuft und an die Rillenkante 7a bzw. die Endkante 7g angelegt ist. Im Hinblick auf die Tangenten t wird die bogenaußenseitige Rillenkante 7a bzw. die Endkante 7g als fortgeführt über die jeweilige Einmündung des Teilungseinschnitts 8 betrachtet.

Wie Fig. 1 ferner zeigt, verleihen die Teilungseinschnitte 8 und die Schrägrillen 7 dem zentralen Laufstreifenbereich 3 blockartige Profilstrukturen 3a, welche in Draufsicht entlang von zwei in Umfangsrichtung aufeinanderfolgenden, zur selben Abfolge gehörenden Schrägrillen 7 langgestreckt parallelogrammförmig sind. Jede blockartige Profilstruktur 3a weist an der jeweiligen Umfangsrille 4 daher einen stumpfwinkeligen Eckbereich 3a' und einen spitzwinkligen Eckbereich 3a" auf.

Jede blockartige Profilstruktur 3a ist an ihrem spitzwinkeligen Eckbereich 3a" mit einem randseitigen Mikroeinschnitt 9 und im Bereich zwischen dem randseitigen Mikroeinschnitt 9 und jenem Teilungseinschnitt 8, welcher die jeweilige blockartige Profilstruktur 3a am beim Abrollen des Reifens bei Vorwärtsfahrt (Pfeil R) zuerst in den Untergrund eintretenden Randbereich begrenzt, mit einer Gruppe aus sieben, in Umfangsrichtung aufeinanderfolgenden Einschnitten 10 versehen.

Die Einschnitte 10 verlaufen, in Draufsicht betrachtet, bezüglich der Umgangsrichtung gegensinnig geneigt zu den beiden die jeweilige blockartige Profilstruktur 3a mitbegrenzenden, an diese daher in Umfangsrichtung angrenzenden, zur selben Abfolge gehörenden Schrägrillen 7, durchqueren die blockartige Profilstruktur 3a und weisen jeweils zwei Einschnittwände, eine zwischen den Einschnittwänden ermittelte konstante Breite von 0,4 mm bis 1,6 mm, insbesondere von 0,6 mm bis 1,2 mm, sowie in radialer Richtung eine maximale Tiefe von 60% bis 100%, insbesondere von 85% bis 95%, der Profiltiefe auf. Die maximale Tiefe der Einschnitte 10 beträgt vorzugsweise höchstens der maximalen Tiefe der Teilungseinschnitte 8 und ist besonders bevorzugter Weise kleiner ist als die maximale Tiefe der Teilungseinschnitte 8 ausgeführt. Ferner ist es bevorzugt, wenn die maximale Tiefe sämtlicher Einschnitte 10 übereinstimmt. Die Einschnitte 10 verlaufen, in Draufsicht betrachtet, jeweils in Form einer harmonischen Zickzack-Welle, setzen sich aus gerade verlaufenden Einschnittabschnitten 10a zusammen, wobei aneinander anschließende Einschnittabschnitte 10a miteinander einen Winkel von 120° bis 150°, insbesondere von 130° bis 140°, einschließen und weisen, in Draufsicht betrachtet, in Erstreckungsrichtung ausgerichtete Einschnittbasislinien b₁₀ auf. Die Einschnitte 10 verlaufen, in Draufsicht betrachtet, bezogen die Einschnittbasislinien b₁₀ zur axialen Richtung jeweils unter einem Winkel ε von 2° bis 70°, insbesondere von bis zu 60°, besonders bevorzugt von bis zu 50°, wobei der Winkel ε innerhalb jeder Profilstruktur 3a ausgehend von jenem randseitigen Einschnitt 10, welcher gegen die Abrollrichtung auf den entsprechenden Teileinschnitt 8 folgt, von Einschnitt 10 zu Einschnitt 10 um 2° bis 10°, insbesondere um 3° bis 7°, bevorzugt um 4° bis 6°, stufenweise zunimmt. Wie Fig. 3 zeigt, mündet jeder Einschnitt 10 - in Draufsicht betrachtet und bezogen auf eine dem Einschnittverlauf folgende Einschnittmittellinie m₁₀ - unter zwei relativ zur jeweiligen Rillenkante 7a, 7b ermittelten Supplementwinkel η in die Schrägrillen 7 ein, wobei die Supplementwinkel η von 90° um bis zu 30°, insbesondere um bis zu 25°, abweichen. Die Supplementwinkel η sind jeweils relativ zu einer Tangente t ermittelt, welche durch das entsprechende Ende der Einschnittmittellinie m₁₀ verläuft und an die jeweilige Rillenkante 7a, 7b angelegt ist. Im Hinblick auf die Tangenten t werden die Rillenkante 7a, 7b als fortgeführt über die jeweilige Einmündung des Teilungseinschnitts 8 betrachtet.

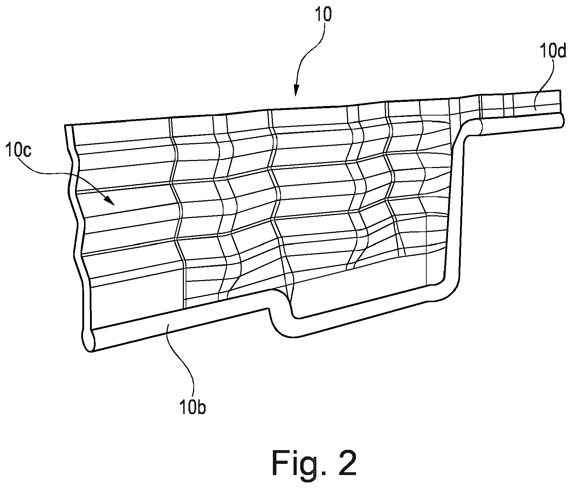

Fig. 2 zeigt exemplarisch eine Ausführung eines Einschnitts 10. Gemäß Fig. 2 weist jeder Einschnitt 10, im Querschnitt betrachtet, einen kanalförmig gerundeten Einschnittgrund 10b auf. Der Einschnitt 10 weist ferner zumindest über einen Großteil seiner radialen Erstreckung eine in radialer Richtung verlaufende Wellenform auf, welche die in Draufsicht vorliegende Wellenform überlagert. Der Einschnitt 10 weist darüber hinaus einen ersten Randabschnitt 10c mit einer radialer Richtung ermittelten Tiefe von 65% bis 95% der maximalen Tiefe des Einschnitts 10 und einen an seinem anderen Ende vorliegenden, gegenüber dem ersten Randabschnitt 10c seichteren, zweiten Randabschnitt 10d mit einer in radialer Richtung ermittelten Tiefe von 1,0 mm bis 3,0 mm auf. Innerhalb einer Profilstruktur 3a aufeinanderfolgende Einschnitte 10 sind bevorzugt derart ausgeführt, dass jeweils ein Einschnitt 10 mit einem zum laufstreifenaußenseitigen Einschnittende verlaufenden, ersten Randabschnitt 10c abwechselnd auf einen Einschnitt 10 mit einem laufstreifenaußenseitigen Einschnittende verlaufenden, zweiten Randabschnitt 10d folgt (siehe Fig. 1).

Die Teilungseinschnitte 8 sind vorzugsweise analog zur bevorzugten Ausführung der Einschnitte 10 ausgeführt, wobei sich keine Randabschnitte aufweisen.

Gemäß Fig. 1 ist der Mikroeinschnitt 9, in Draufsicht betrachtet, bezüglich der Umgangsrichtung gleichsinnig geneigt zu den in derselben blockartigen Profilstruktur 3a befindlichen Einschnitten 10, durchquert die blockartige Profilstruktur 3a, weist eine Breite von 0,4 mm bis 1,6 mm, insbesondere von 0,6 mm bis 1,2 mm, in radialer Richtung über seine gesamte Erstreckung eine Tiefe von 1,0 mm bis 3,0 mm, insbesondere von bis zu 2,0 mm, sowie eine in Erstreckungsrichtung ausgerichtete Einschnittbasislinie b₉ auf und verläuft, in Draufsicht betrachtet, langgestreckt Z-förmig sowie bezogen auf die Einschnittbasislinie b₉ zur axialen Richtung unter einem Winkel δ, welcher größer ausgeführt ist als der Winkel ε des jeweils benachbarten Einschnitts 10.

Besonders bevorzugter Weise sind der Winkel δ des Mikroeinschnitts 9 und die sich auf die beschriebene Weise unterscheidenden Winkel ε der Einschnitte 10 derart aufeinander abgestimmt, dass der Mikroeinschnitt 9 zur Schrägrille 7, in welche einmündet, bezogen auf die Einschnittbasislinie b₉ und die Rillenmittellinie m_{SR} unter zwei Supplementwinkel γ orientiert ist, die von 90° um bis zu 15°, insbesondere um bis zu 10°, bevorzugt um bis zu 5°, abweichen. Die zwei Supplementwinkel γ ergänzen sich bekannter Weise auf 180°. Da die Rillenmittellinie m_{SR} bogenförmig verläuft, sind die Supplementwinkel γ relativ zu einer an die Rillenmittellinie m_{SR} angelegten, durch den gegenseitigen Schnittpunkt der Einschnittbasislinie b₉ mit der Rillenmittellinie m_{SR} verlaufenden Tangente (nicht eingezeichnet) ermittelt.

Die Erfindung ist auf das beschriebene Ausführungsbeispiel nicht beschränkt. Insbesondere können die Einschnitte 10 einen vom beschriebenen Querschnitt abweichenden Querschnitt aufweisen. Die Einschnitte 10 können, in Draufsicht betrachtet, gerade oder zumindest abschnittsweise wellenförmig verlaufen. Die Mikroeinschnitte 9 sind optional. Statt der Mikroeinschnitte 9 können Einschnitte 10 vorgesehen sein. Die Umfangsrillen 4 können, in Draufsicht betrachtet, beispielsweise gerade oder wellenförmig verlaufen. Die Schrägrillen 7 können, in Draufsicht betrachtet, gerade verlaufen, sodass sich deren Winkel α auf die Rillenmittellinie m_{SR} bezieht.

### Bezugszeichenliste

- 1: Laufstreifen
- 1a: Randkante
- 2: schulterseitige Profilrippe
- 3: zentraler Laufstreifenbereich
- 3a: blockartige Profilstruktur
- 3a': stumpfwinkeliger Eckbereich
- 3a": spitzwinkliger Eckbereich
- 4: Umfangsrille
- 4a: laufstreifenaußenseitige Rillenkante
- 4b: laufstreifeninnenseitige Rillenkante
- 4c, 4d: Rillenabschnitt
- 5: schulterseitiger Profilblock
- 6: schulterseitige Querrille
- 7: Schrägrille
- 7a: bogenaußenseitige Rillenkante
- 7b: bogeninnenseitige Rillenkante
- 7c: Rillengrund
- 7d, 7e: Rillenflanke
- 7f: Endflanke
- 7g: Endkante
- 8: Teilungseinschnitt
- 8a: Einschnittabschnitt
- 9: Mikroeinschnitt
- 10: Einschnitt
- 10a: Einschnittabschnitt
- 10b: Einschnittgrund
- 10c: Randabschnitt
- 10d: Randabschnitt
- A-A: Linie (Reifenäquatorialebene)
- a₁: Abstand
- B₁, B_{UR}, U_{SR}: Breite
- b_{b}: maximale Breite
- b₈, b₉, b₁₀: Einschnittbasislinie
- c_{SR}: Länge
- h₁, h₂: Hilfslinie
- m₈, m₁₀: Einschnittmittellinie
- m_{SR}, m_{UR}: Rillenmittellinie
- R: Pfeil (Abrollrichtung)
- t: Tangente
- α, α', β, δ, ε: Winkel
- γ, θ, η: Supplementwinkel

## Patentansprüche

1. Nutzfahrzeugreifen mit einem laufrichtungsgebunden ausgeführten Laufstreifen (1) mit einem zentralen Laufstreifenbereich (3) und durch schulterseitige Umfangsrillen (4) von diesem getrennten, schulterseitigen Profilrippen (2), wobei der zentrale Laufstreifenbereich (3) an die schulterseitigen Umfangsrillen (4) angrenzende, durch Teilungseinschnitte (8) mitbegrenzte, blockartige Profilstrukturen (3a) aufweist, welche jeweils mit weiteren Einschnitten (10) versehen sind, wobei die Teilungseinschnitte (8) und die weiteren Einschnitte (10) jeweils eine Breite von 0,4 mm bis 1,6 mm und eine maximale Tiefe von 60% bis 100% der Profiltiefe aufweisen,
**dadurch gekennzeichnet,**
**dass** der zentrale Laufstreifenbereich (3) mit über seine maximale Breite (b_{b}) V-förmig zueinander verlaufenden, innerhalb des zentralen Laufstreifenbereichs (3) endenden Schrägrillen (7) versehen ist, welche - in Folge des V-förmigen Verlaufs - in die eine schulterseitige Umfangsrille (4) einmündende Schrägrillen (7) und die andere schulterseitige Umfangsrille (4) einmündende Schrägrillen (7) sind, wobei die in die eine schulterseitige Umfangsrille (4) einmündenden Schrägrillen (7) zu den in die andere schulterseitige Umfangsrille (4) einmündenden Schrägrillen (7) in Umfangsrichtung versetzt sind, wobei die Teilungseinschnitte (8) zwischen V-förmig zueinander verlaufenden Schrägrillen (7) verlaufen und vom Ende jeder Schrägrille (7) jeweils ein Teilungseinschnitt (8) ausgeht, sodass die Teilungseinschnitte (8) gemeinsam mit den Schrägrillen (7) den zentralen Laufstreifenbereich (3) in die blockartigen Profilstrukturen (3a) gliedern, wobei die weiteren Einschnitte (10) die jeweilige blockartige Profilstruktur (3a) durchqueren, bezüglich der Umfangsrichtung gegensinnig zu den an die blockartige Profilstruktur (3a) angrenzenden Schrägrillen (7) geneigt sind und jeweils innerhalb derselben blockartigen Profilstruktur (3a) zur axialen Richtung unter Winkeln (ε) verlaufen, welche ausgehend von jenem weiteren Einschnitt (10), welcher gegen die Abrollrichtung (R) auf den entsprechenden Teilungseinschnitt (8) folgt, von Einschnitt (10) zu Einschnitt (10) stufenweise zunehmen.

2. Nutzfahrzeugreifen nach Anspruch 1, **dadurch gekennzeichnet, dass** die Teilungseinschnitte (8), in Draufsicht betrachtet, in axialer Richtung verlaufen.

3. Nutzfahrzeugreifen nach Anspruch 1 oder 2, **dadurch gekennzeichnet, dass** die Winkel (ε), unter welchen die weiteren Einschnitte (10) zur axialen Richtung verlaufen, 2° bis 70°, insbesondere bis zu 60°, bevorzugt bis zu 50°, betragen, wobei jeweils innerhalb derselben blockartigen Profilstruktur (3a) der Winkel (ε) von Einschnitt (10) zu Einschnitt (10) stufenweise insbesondere um 2° bis 10°, bevorzugt um 3° bis 7°, besonders bevorzugt um 4° bis 6°, zunimmt.

4. Nutzfahrzeugreifen nach einem der Ansprüche 1 bis 3, **dadurch gekennzeichnet, dass** die Schrägrillen (7) eine maximale Tiefe von 60% bis 100%, insbesondere von 75% bis 95%, der Profiltiefe, eine Breite (b_{SR}) von 5,0 mm bis 35,0 mm, insbesondere von 10,0 mm bis 25,0 mm, sowie eine in die axiale Richtung projizierte Länge (c_{SR}) von 40% bis 60%, insbesondere von 45% bis 55%, der Breite (b_{b}) des zentralen Laufstreifenbereichs (3) aufweisen.

5. Nutzfahrzeugreifen nach einem der Ansprüche 1 bis 4, **dadurch gekennzeichnet, dass** jede blockartige Profilstruktur (3a) mit jeweils einem durchquerenden, randseitigen Mikroeinschnitt (9) mit einer Breite von 0,4 mm bis 1,6 mm, insbesondere von 0,6 mm bis 1,2 mm, und einer Tiefe von 1,0 mm bis 3,0 mm, insbesondere von bis zu 2,0 mm, versehen ist, wobei sich innerhalb jeder blockartigen Profilstruktur (3a) sämtliche weiteren Einschnitte (10) zwischen dem randseitigen Mikroeinschnitt (9) und dem Teilungseinschnitt (8) befinden.

6. Nutzfahrzeugreifen nach einem der Ansprüche 1 bis 5, **dadurch gekennzeichnet, dass** in jeder blockartigen Profilstruktur (3a) vier bis zehn, insbesondere acht oder neun, der weiteren Einschnitte (10) vorgesehen sind.

7. Nutzfahrzeugreifen nach einem der Ansprüche 1 bis 6, **dadurch gekennzeichnet, dass** die Schrägrillen (7), in Draufsicht betrachtet, zur Umfangsrichtung unter einem Winkel (α) von 30° bis 70°, insbesondere von 35° bis 60°, bevorzugt von 40° bis 50°, verlaufen.

8. Nutzfahrzeugreifen nach einem der Ansprüche 1 bis 7, **dadurch gekennzeichnet, dass** die Schrägrillen (7), in Draufsicht betrachtet, derart bogenförmig verlaufen, dass ein bogenaußenseitig relativ zur Umfangsrichtung ermittelter, auf die Rillenmittellinie (m_{SR}) bezogener spitzer Winkel (α') ausgehend vom laufstreifeninnenseitigen Ende der Schrägrille (7) zum laufstreifenaußenseitigen Ende der Schrägrille (7) fortlaufend zunimmt.

9. Nutzfahrzeugreifen nach einem der Ansprüche 1 bis 8, **dadurch gekennzeichnet, dass** die Teilungseinschnitte (8) über ihre gesamte Erstreckung die maximale Tiefe aufweisen.

10. Nutzfahrzeugreifen nach einem der Ansprüche 1 bis 9, **dadurch gekennzeichnet, dass** weitere Einschnitte (10) und/oder Teilungseinschnitte (8) vorgesehen sind, welche, im Querschnitt betrachtet, einen kanalförmig gerundeten Einschnittgrund (10b) aufweisen.

11. Nutzfahrzeugreifen nach einem der Ansprüche 1 bis 10, **dadurch gekennzeichnet, dass** weitere Einschnitte (10) und/oder Teilungseinschnitte (8) vorgesehen sind, welche zumindest über einen Großteil ihrer radialen Erstreckung eine in radialer Richtung verlaufende Wellenform aufweisen.

12. Nutzfahrzeugreifen nach einem der Ansprüche 1 bis 11, **dadurch gekennzeichnet, dass** weitere Einschnitte (10) und/oder Teilungseinschnitte (8) vorgesehen sind, welche, in Draufsicht betrachtet, zumindest über einen Großteil ihrer Erstreckung in einer Wellenform, insbesondere in Form einer Zickzack-Welle, verlaufen.

13. Nutzfahrzeugreifen nach einem der Ansprüche 1 bis 12, **dadurch gekennzeichnet, dass** jeder weitere Einschnitt (10) einen ersten Randabschnitt (10c) mit einer in radialer Richtung ermittelten Tiefe von 65% bis 95% der maximalen Tiefe des Einschnitts (10) und einen zweiten Randabschnitt (10d) mit einer in radialer Richtung ermittelten Tiefe von 1,0 mm bis 3,0 mm aufweist.

14. Nutzfahrzeugreifen nach Anspruch 13, **dadurch gekennzeichnet, dass** innerhalb jeder blockartigen Profilstruktur (3a) aufeinanderfolgende weitere Einschnitte (10) derart ausgeführt sind, dass jeweils ein Einschnitt (10) mit einem zum laufstreifenaußenseitigen Einschnittende verlaufenden, ersten Randabschnitt (10b) abwechselnd auf einen Einschnitt (10) mit einem zum laufstreifenaußenseitigen Einschnittende verlaufenden, zweiten Randabschnitt (10c) folgt.

15. Nutzfahrzeugreifen nach einem der Ansprüche 1 bis 14, **dadurch gekennzeichnet, dass** die Einschnitte (10) und/oder die Teilungseinschnitte (8) - in Draufsicht betrachtet und jeweils bezogen auf eine dem Einschnittverlauf folgende Einschnittmittellinie (m₈, m₁₀) - unter relativ zur an der Laufstreifenperipherie vorliegenden, jeweiligen Kante (7a, 7b, 7g) der Schrägrille (7) ermittelten Supplementwinkel (θ, η) in die Schrägrille (7) einmünden, wobei die Supplementwinkel (θ, η) von 90° um bis zu 30°, insbesondere um bis zu 25°, abweichen.

## Claims

1. Utility-vehicle tyre having a tread (1) of directional design with a central tread region (3) and with shoulder-side profile ribs (2) which are separated from said central tread region by shoulder-side circumferential grooves (4), wherein the central tread region (3) has block-like profile structures (3a) which are adjacent to the shoulder-side circumferential grooves (4) and which are partly delimited by dividing sipes (8) and which are in each case provided with further sipes (10), wherein the dividing sipes (8) and the further sipes (10) in each have a width of 0.4 mm to 1.6 mm and a maximum depth of 60% to 100% of the profile depth,
**characterized**
**in that** the central tread region (3) is provided with oblique grooves (7) which extend in a V-shaped manner in relation to one another over its maximum width (b_{b}) and which end within the central tread region (3) and which - as a result of extending in a V-shaped manner - are oblique grooves (7) opening out into the one shoulder-side circumferential groove (4) and oblique grooves (7) opening out into the other shoulder-side circumferential groove (4), wherein the oblique grooves (7) opening out into the one shoulder-side circumferential groove (4) are offset in the circumferential direction from the oblique grooves (7) opening out into the other shoulder-side circumferential groove (4), wherein the dividing sipes (8) extend between oblique grooves (7) that extend in a V-shaped manner in relation to one another and in each case one dividing sipe (8) proceeds from the end of each oblique groove (7), so that, together with the oblique grooves (7), the dividing sipes (8) divide the central tread region (3) into the block-like profile structures (3a), wherein the further sipes (10) traverse the respective block-like profile structure (3a) and, with respect to the circumferential direction, are inclined in an opposite direction to the oblique grooves (7) adjacent to the block-like profile structure (3a) and, in each case within the same block-like profile structure (3a), extend at angles (ε) to the axial direction which, proceeding from that further sipe (10) which follows the corresponding dividing sipe (8) counter to the rolling direction (R), increase in steps from sipe (10) to sipe (10).

2. Utility-vehicle tyre according to Claim 1, **characterized in that**, when seen in plan view, the dividing sipes (8) extend in the axial direction.

3. Utility-vehicle tyre according to Claim 1 or 2, **characterized in that** the angles (ε) at which the further sipes (10) extend to the axial direction are 2° to 70°, in particular up to 60°, preferably up to 50°, wherein, in each case within the same block-like profile structure (3a), the angle (ε) increases in steps, in particular by 2° to 10°, preferably by 3° to 7°, particularly preferably by 4° to 6°, from sipe (10) to sipe (10).

4. Utility-vehicle tyre according to one of Claims 1 to 3, **characterized in that** the oblique grooves (7) have a maximum depth of 60% to 100%, in particular of 75% to 95%, of the profile depth, a width (b_{SR}) of 5.0 mm to 35.0 mm, in particular of 10.0 mm to 25.0 mm, and a length (c_{SR}), projected into the axial direction, of 40% to 60%, in particular of 45% to 55%, of the width (b_{b}) of the central tread region (3).

5. Utility-vehicle tyre according to one of Claims 1 to 4, **characterized in that** each block-like profile structure (3a) is provided with in each case one traversing, edge-side micro-sipe (9) having a width of 0.4 mm to 1.6 mm, in particular of 0.6 mm to 1.2 mm, and a depth of 1.0 mm to 3.0 mm, in particular of up to 2.0 mm, wherein, within each block-like profile structure (3a), all the further sipes (10) are situated between the edge-side micro-sipe (9) and the dividing sipe (8).

6. Utility-vehicle tyre according to one of Claims 1 to 5, **characterized in that**, in each block-like profile structure (3a), provision is made of four to ten, in particular eight or nine, of the further sipes (10).

7. Utility-vehicle tyre according to one of Claims 1 to 6, **characterized in that**, when seen in plan view, the oblique grooves (7) extend at an angle (α) of 30° to 70°, in particular of 35° to 60°, preferably of 40° to 50°, to the circumferential direction.

8. Utility-vehicle tyre according to one of Claims 1 to 7, **characterized in that**, when seen in plan view, the oblique grooves (7) extend arcuately in such a way that an acute angle (α'), determined relative to the circumferential direction at the outer side of the arc and based on the groove midline (m_{SR}), increases continuously from the tread-inner-side end of the oblique groove (7) to the tread-outer-side end of the oblique groove (7).

9. Utility-vehicle tyre according to one of Claims 1 to 8, **characterized in that** the dividing sipes (8) have the maximum depth over their entire extent.

10. Utility-vehicle tyre according to one of Claims 1 to 9, **characterized in that** provision is made of further sipes (10) and/or dividing sipes (8) which, when seen in cross-section, have a sipe base (10b) with a duct-like rounding.

11. Utility-vehicle tyre according to one of Claims 1 to 10, **characterized in that** provision is made of further sipes (10) and/or dividing sipes (8) which, at least over a large part of their radial extent, have a waveform extending in the radial direction.

12. Utility-vehicle tyre according to one of Claims 1 to 11, **characterized in that** provision is made of further sipes (10) and/or dividing sipes (8) which, when seen in plan view, at least over a large part of their extent, extend with a waveform, in particular with the form of a zigzagging wave.

13. Utility-vehicle tyre according to one of Claims 1 to 12, **characterized in that** each further sipe (10) has a first edge portion (10c) with a depth, determined in the radial direction, of 65% to 95% of the maximum depth of the sipe (10) and has a second edge portion (10d) with a depth, determined in the radial direction, of 1.0 mm to 3.0 mm.

14. Utility-vehicle tyre according to Claim 13, **characterized in that**, within each block-like profile structure (3a), successive further sipes (10) are formed in such a way that in each case a sipe (10) which has a first edge portion (10b) extending to the tread-outer-side sipe end follows a sipe (10) which has a second edge portion (10c) extending to the tread-outer-side sipe end in an alternating manner.

15. Utility-vehicle tyre according to one of Claims 1 to 14, **characterized in that** the sipes (10) and/or the dividing sipes (8) - when seen in plan view and in each case based on a sipe midline (m₈, m₁₀) following the sipe profile - open out into the oblique groove (7) at supplementary angles (θ, η) determined relative to the respective edge (7a, 7b, 7g) of the oblique groove (7) that is situated at the tread periphery, wherein the supplementary angles (θ, η) differ from 90° by up to 30°, in particular by up to 25°.

## Revendications

1. Pneu pour véhicule utilitaire avec une bande de roulement (1) réalisée selon la direction de déplacement avec une zone (3) de bande de roulement centrale et des rainures profilées (2) côté épaulement séparées de celle-ci par des rainures périphériques (4) côté épaulement, la zone (3) de bande de roulement centrale comportant des structures profilées (3a) en bloc jouxtant les rainures périphériques (4) côté épaulement, délimitées par des entailles de séparation (8), lesquelles sont pourvues chacune d'entailles supplémentaires (10), les entailles de séparation (8) et les entailles supplémentaires (10) présentaant chacune une largeur de 0,4 mm à 1,6 mm et une profondeur maximale de 60 % à 100 % de la profondeur de profilé,
**caractérisé en ce**
**que** la zone (3) de bande de roulement centrale est pourvue de rainures obliques (7) s'étendant les unes par rapport aux autres en forme de V sur sa largeur maximale (b_{b}), se terminant à l'intérieur de la zone (3) de bande de roulement centrale, lesquelles sont - du fait du profil en forme de V - des rainures obliques (7) débouchant dans une rainure périphérique (4) côté épaulement et des nervures obliques (7) débouchant dans l'autre rainure périphérique (4) côté épaulement, les rainures obliques (7) débouchant dans une rainure périphérique (4) côté épaulement étant décalées dans la direction périphérique par rapport aux rainures obliques (7) débouchant dans l'autre rainure périphérique (4) côté épaulement, les entailles de séparation (8) s'étendant entre des rainures obliques (7) s'étendant les unes par rapport aux autres en forme de V et une entaille de séparation (8) partant respectivement de l'extrémité de chaque rainure oblique (7) si bien que les entailles de séparation (8) divisent conjointement avec les rainures obliques (7) la zone (3) de bande de roulement centrale en les structures profilées (3a) en bloc, les entailles supplémentaires (10) traversant la structure profilée (3a) en bloc respective, étant inclinées dans le sens opposé par rapport aux rainures obliques (7) jouxtant la structure profilée (3a) en bloc par rapport à la direction périphérique et s'étendant chacune à l'intérieur de la même structure profilée (3a) en bloc par rapport à la direction axiale selon des angles (ε), qui augmentent progressivement d'entaille (10) à entaille (10) en partant de cette entaille supplémentaire (10), qui suit l'entaille de séparation (8) correspondante à l'encontre de la direction de roulement (R).

2. Pneu pour véhicule utilitaire selon la revendication 1, **caractérisé en ce que** les entailles de séparation (8) s'étendant, vues en plan, dans la direction axiale.

3. Pneu pour véhicule utilitaire selon la revendication 1 ou 2, **caractérisé en ce que** les angles (ε), selon lesquels les entailles supplémentaires (10) s'étendent par rapport à la direction axiale, vont de 2° à 70°, en particulier vont jusqu'à 60°, de manière préférée jusqu'à 50°, l'angle (ε) d'entaille (10) à entaille (10) augmentant progressivement en particulier de 2° à 10°, de manière préférée de 3° à 7°, de manière particulièrement préférée de 4° à 6° chacun à l'intérieur de la même structure profilée (3a) en bloc.

4. Pneu pour véhicule utilitaire selon l'une des revendications 1 à 3, **caractérisé en ce que** les rainures obliques (7) présentent une profondeur maximale de 60 % à 100 %, en particulier de 75 % à 95 %, de la profondeur de profilé, une largeur (b_{SR}) de 5,0 mm à 35,0 mm, en particulier de 10,0 mm à 25,0 mm, ainsi qu'une longueur (c_{SR}) projetée dans la direction axiale de 40 % à 60 %, en particulier de 45 % à 55 %, de la largeur (b_{b}) de la zone (3) de bande de roulement centrale.

5. Pneu pour véhicule utilitaire selon l'une des revendications 1 à 4, **caractérisé en ce que** chaque structure profilée (3a) en bloc est pourvue de respectivement une micro-entaille (9) côté bord traversante avec une largeur de 0,4 mm à 1,6 mm, en particulier de 0,6 mm à 1,2 mm, et une profondeur de 1,0 mm à 3,0 mm, en particulier allant jusqu'à 2,0 mm, toutes les entailles supplémentaires (10) se trouvant entre la micro-entaille (9) côté bord et l'entaille de séparation (8) à l'intérieur de chaque structure profilée (3a) en bloc.

6. Pneu pour véhicule utilitaire selon l'une des revendications 1 à 5, **caractérisé en ce que** quatre à dix, en particulier huit ou neuf, des entailles supplémentaires (10) sont prévues dans chaque structure profilée (3a) en bloc.

7. Pneu pour véhicule utilitaire selon l'une des revendications 1 à 6, **caractérisé en ce que** les rainures obliques (7) s'étendent, vues en plan, par rapport à la direction périphérique selon un angle (α) de 30° à 70°, en particulier de 35° à 60°, de manière préférée de 40° à 50°.

8. Pneu pour véhicule utilitaire selon l'une des revendications 1 à 7, **caractérisé en ce que** les rainures obliques (7) s'étendent, vues en plan, en forme d'arc de telle manière qu'un angle aigu (α') déterminé côté extérieur de l'arc par rapport à la direction périphérique, se rapportant à la ligne centrale de rainure (m_{SR}) augmente en continu en partant de l'extrémité côté intérieur de bande de roulement de la rainure oblique (7) vers l'extrémité côté extérieur de bande de roulement de la rainure oblique (7).

9. Pneu pour véhicule utilitaire selon l'une des revendications 1 à 8, **caractérisé en ce que** les entailles de séparation (8) présentent sur la totalité de leur extension la profondeur maximale.

10. Pneu pour véhicule utilitaire selon l'une des revendications 1 à 9, **caractérisé en ce que** des entailles supplémentaires (10) et/ou des entailles de séparation (8) sont prévues, lesquelles présentent, vues dans la section transversale, un fond (10b) d'entaille arrondi en forme de canal.

11. Pneu pour véhicule utilitaire selon l'une des revendications 1 à 10, **caractérisé en ce que** des entailles supplémentaires (10) et/ou des entailles de séparation (8) sont prévues, lesquelles présentent au moins sur une grande partie de leur extension radiale une forme ondulée s'étendant dans la direction radiale.

12. Pneu pour véhicule utilitaire selon l'une des revendications 1 à 11, **caractérisé en ce que** des entailles supplémentaires (10) et/ou des entailles de séparation (8) sont prévues, lesquelles s'étendent, vues en plan, au moins sur une grande partie de leur extension radiale en une forme ondulée, en particulier sous la forme d'une onde en zigzag.

13. Pneu pour véhicule utilitaire selon l'une des revendications 1 à 12, **caractérisé en ce que** chaque entaille supplémentaire (10) comporte une première section de bord (10c) avec une profondeur déterminée dans la direction radiale de 65 % à 95 % de la profondeur maximale de l'entaille (10) et une deuxième section de bord (10d) avec une profondeur déterminée dans la direction radiale de 1,0 mm à 3,0 mm.

14. Pneu pour véhicule utilitaire selon la revendication 13, **caractérisé en ce que** sont réalisées à l'intérieur de chaque structure profilée (3a) en bloc des entailles supplémentaires (10) se suivant les unes les autres de telle manière que respectivement une entaille (10) avec une première section de bord (10b) s'étendant vers l'extrémité d'entaille côté extérieur de la bande de roulement suit en alternance une entaille (10) avec une deuxième section de bord (10c) s'étendant vers l'extrémité d'entaille côté extérieur de la bande de roulement.

15. Pneu pour véhicule utilitaire selon l'une des revendications 1 à 14, **caractérisé en ce que** les entailles (10) et/ou les entailles de séparation (8) - vues en plan et chacune par rapport à une ligne centrale d'entaille (m₈, m₁₀) suivant le profil d'entaille - débouchent dans la rainure oblique (7) selon des angles supplémentaires (θ, η) déterminés par rapport au bord (7a, 7b, 7g) respectif de la rainure oblique (7), présents sur la périphérie de bande de roulement, les angles supplémentaires (θ, η) étant différents de 90° d'une valeur allant jusqu'à 30°, en particulier jusqu'à 25°.
